# EUROPEAN PATENT SPECIFICATION

(11) **EP 4 104 716 B1**
(45) Date of publication and mention of the grant of the patent: **11.10.2023**
(21) Application number: 22178871.4
(22) Date of filing: 14.06.2022
(51) Int. Cl.: A47J 19/02, A47J 43/046, A47J 43/07

(54) **GRINDING MACHINE AND ASSEMBLING METHOD THEREOF**
MAHLMASCHINE UND VERFAHREN ZU IHRER MONTAGE
MACHINE DE BROYAGE ET SON PROCÉDÉ D'ASSEMBLAGE

(30) Priority: 18.06.2021 CN 202110680433
(43) Date of publication of application: 21.12.2022
(73) Proprietor: T.f. Electrical Technology (shenzhen) Co., Ltd, Shenzhen, Guangdong 518000 (CN)
(72) Inventor: ZHOU, Liwei, Shenzhen (CN); ZHOU, Zhengkuan, Shenzhen (CN); ZHOU, Wenhong, Shenzhen (CN)
(74) Representative: Lin Chien, Mon-Yin

(56) References cited:
- EP-A1- 2 441 358
- EP-A1- 2 625 991
- EP-A1- 3 127 459

## Description

### TECHNICAL FIELD

The present disclosure relates to a technical field of food cutting and grinding machines, in particular to a grinding machine with an integrated double-disc structure and an assembling method thereof.

### BACKGROUND

In terms of conditioning of vegetables, fruits and beans, there are all kinds of conditioning machines that provide mincing and juicing of the vegetables, the fruits, and the beans, so that people can quickly obtain nutritional supplements. In the prior art, grinding machine generally cut and chop the vegetables, the fruits and the beans by high-speed rotation of a blade. If the chopped fruits, vegetables, and beans need to be further minced, the grinding machines need to be equipped with a grinding structure. At present, various grinding machines on the market have different setting methods for grinding structures, which are roughly divided into two categories: detachable and non-removable.

The non-removable grinding machines are to fix the blade set and grinding structure together at a bottom of a container of the non-removable grinding machine. Advantage of this kind of non-removable grinding machines are that they are easy to produce and process, However, such structure also brings a great disadvantage, that is, the non-removable grinding machines are not easy to clean. Because a user is unable to take out the blade and grinding structure for cleaning after juicing or grinding, food residues hidden in corners of the container cannot be cleaned, which affects the next food processing, and brings greater health risks. As a result, this kind of non-removable grinding machines has basically withdrawn from the market due to poor user experience.

The detachable grinding machines are developed to solve defects of the aforementioned mom-removable grinding machines. This kind of detachable grinding machines adopts a method of setting the grinding structure and the blade separately. First, an upper grinding disc of the grinding structure is fixedly connected to the container by ultrasonic welding. A lower grinding disc of the grinding structure is further fixed with the blade and is connected to the container through a snapping structure, so that the blade and the grinding structure are detachable from the container. Although the detachable grinding machines solve a problem of inconvenient disassembly and cleaning, there are still many disadvantages, For example, since the container is generally made of plastic and the upper grinding disc is made of metal, the ultrasonic welding method may cause the upper grinding disc to fall off during use due to a difference in thermal expansion coefficient. Further, it also affect mutual movement between the upper grinding disc and the lower grinding disc, which may lead to safety accidents. More prominently, such detachable arrangement of the grinding machines brings great difficulties to an assembly of components thereof. Once an accuracy of the components is not properly grasped, the upper grinding disc and the lower grinding disc interfere with each other. In a process of mass manufacturing and assembling grinding machines, a gap between the upper grinding disc and the lower grinding disc is quite uncertain, and a scrap rate of the upper grinding disc and the lower grinding disc is extremely high, which in turn requires more investment in product quality control and leads to high costs. Further, when preparing a certain type of detachable grinding machine, once processing parameters of a production equipment are adjusted, only this certain type of detachable grinding machine can be processed, and other types of grinding machines cannot be produced, resulting in occupied equipment resources, which increases manufacturing costs. As a result, the price of the detachable grinding machine is high, and the user experience is not satisfactory.

EP2441358A1 discloses a machine for cutting and grinding fruits, vegetables and foods, and more particularly to a machine with the advantages of convenient assembly and disassembly, power saving and low noise, and having dual functions of cutting and grinding.

### SUMMARY

In view of deficiencies in the prior art, purpose of the present disclosure is to provide a grinding machine with an integrated double-disc structure and an assembling method thereof, which well realize the above purpose.

In order to achieve the purpose, the present disclosure provides a grinding machine with an integrated double-disc structure.

The grinding machine with an integrated double-disc structure comprises a container, a grinding assembly, and a sealing base. A bottom portion of the container defines a juice outlet. The sealing base seals the juice outlet. The sealing base is detachably connected with the container. The grinding assembly comprises a cutting tool, an upper grinding disc, and a lower grinding disc arranged in sequence from top to bottom. A drive shaft is rotatably arranged on the sealing base. The cutting tool and the lower grinding disc are fixed on the drive shaft. The upper grinding disc is fixed on the sealing base. A first positioning step configured to position the upper grinding disc is formed on an inner wall of the juice outlet. A first elastic sealing piece is arranged between the upper grinding disc and the first positioning step.

In the grinding machine with the integrated double-disc structure of the present disclosure, the upper grinding disc defines a through hole. The drive shaft passes through the through hole. The upper grinding disc is connected with the sealing base through fixed columns.

In the grinding machine with the integrated double-disc structure of the present disclosure, the upper grinding disc is of a ring structure and an inner hole of the upper grinding disc is configured as the through hole.

In the grinding machine with the integrated double-disc structure of the present disclosure, a feeding groove is provided on an inner side of an upper surface of the upper grinding disc. External food enters a lower surface of the upper grinding disc through the feeding groove.

In the grinding machine with the integrated double-disc structure of the present disclosure, an annular inclined surface is formed on an upper end of the upper grinding disc. The annular inclined surface is gradually narrowed from bottom to top; the first positioning step is in a shape of a trumpet to match with the annular inclined surface.

In the grinding machine with the integrated double-disc structure of the present disclosure, the first elastic sealing piece is a sealing rubber ring. A shape of the first elastic sealing piece is matched with a shape of the annular inclined surface.

In the grinding machine with the integrated double-disc structure of the present disclosure, an upper end of the annular inclined surface protrudes upward to form an annular cofferdam. An outer diameter of the annular cofferdam is equal to an inner diameter of the first elastic sealing piece.

In the grinding machine with the integrated double-disc structure of the present disclosure, a grinding cavity is formed between the sealing base and the first positioning step. An inner wall of the grinding cavity defines an opening. The grinding machine further comprises a circulation pipe communicating the grinding cavity and an upper end of an inner cavity of the container. The container comprises a protective cover wrapped on an outer side of the circulation pipe. The protective cover forms a handle for human hands to hold.

In the grinding machine with the integrated double-disc structure of the present disclosure, an annular step is arranged on the sealing base. A second positioning step configured to position the annular step is arranged on the inner wall of the juice outlet. A second elastic sealing piece is arranged between the annular step and the second positioning step. The sealing base is screwed with the container or the sealing base is snapped on the container.

The present disclosure further provides an assembling method for the grinding machine. The assembling method for the grinding machine comprises steps:
assembling a drive shaft to a sealing base, and assembling a lower grinding disc and a cutting tool to an upper end of the drive shaft in sequence and fixing the lower grinding disc and the cutting tool in place;
fixing an upper grinding disc on the sealing base with an axis of the drive shaft as a reference; and
fixing the sealing base in a juice outlet of the container in place; making a first elastic sealing piece tightly fit with a first positioning step and making a second elastic sealing piece tightly fit with a second positioning step.

The present disclosure provides the grinding machine with the integrated double-disc structure and an assembling method thereof. By fixing the upper grinding disc and the lower grinding disc on the sealing base, and by assembling the upper grinding disc and the lower grinding disc with respect to the axis of the drive shaft, the trouble that a gap between the upper grinding disc and the lower grinding disc is difficult to ensure an accuracy caused by the processing technology of the container and the sealing base is avoided. Thus, the grinding machine is easy to disassemble and clean and manufacturing and processing costs are reduced.

### BRIEF DESCRIPTION OF DRAWINGS

In order to clearly describe technical solutions in the embodiments of the present disclosure, the following will briefly introduce the drawings that need to be used in the description of the embodiments or the prior art. Apparently, the drawings in the following description are merely some of the embodiments of the present disclosure, and those skilled in the art are able to obtain other drawings according to the drawings without contributing any inventive labor. In the drawing:

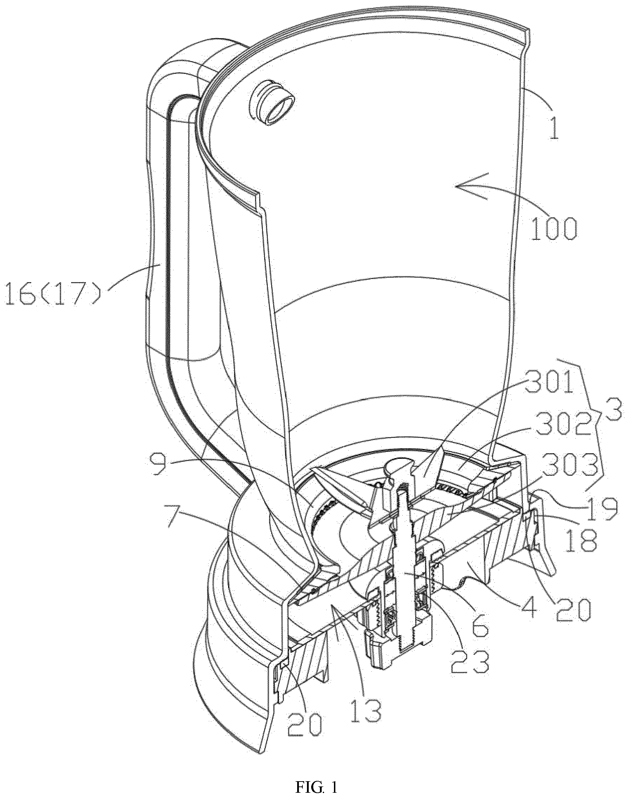

FIG. 1 is a perspective cross-sectional schematic diagram of a grinding machine of the present disclosure.

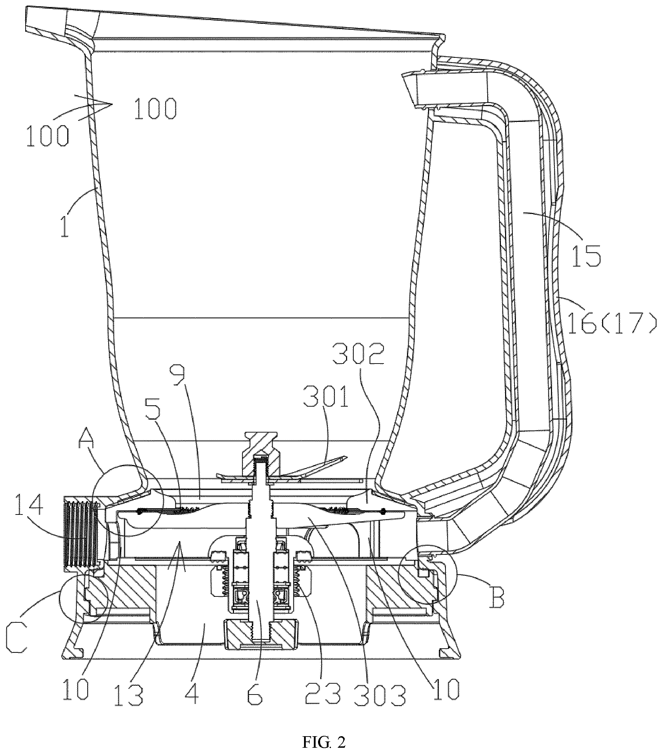

FIG. 2 is a cross-sectional schematic diagram of the grinding machine of the present disclosure.

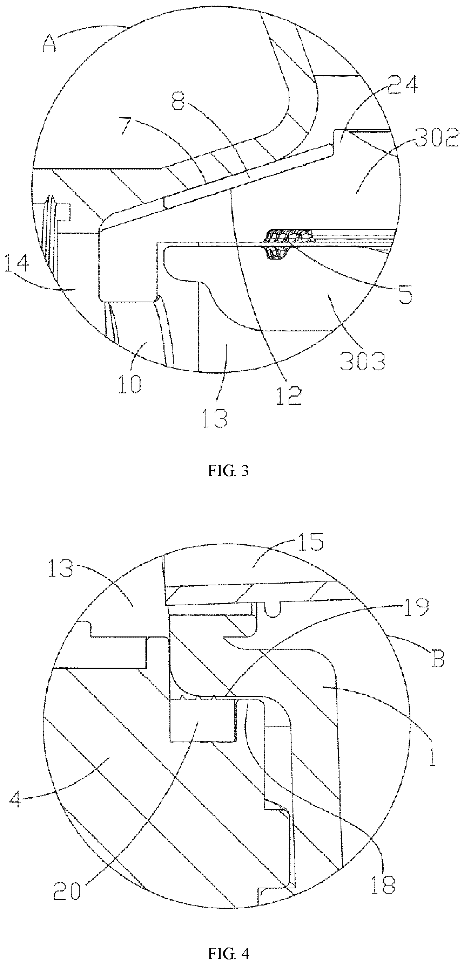

FIG. 3 is an enlarged view of portion A shown in FIG. 2.
FIG. 4 is an enlarged view of portion B shown in FIG 2.

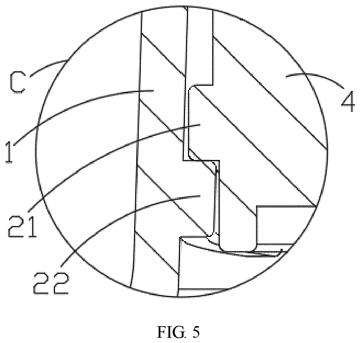

FIG. 5 is an enlarged view of portion C shown in FIG 2.

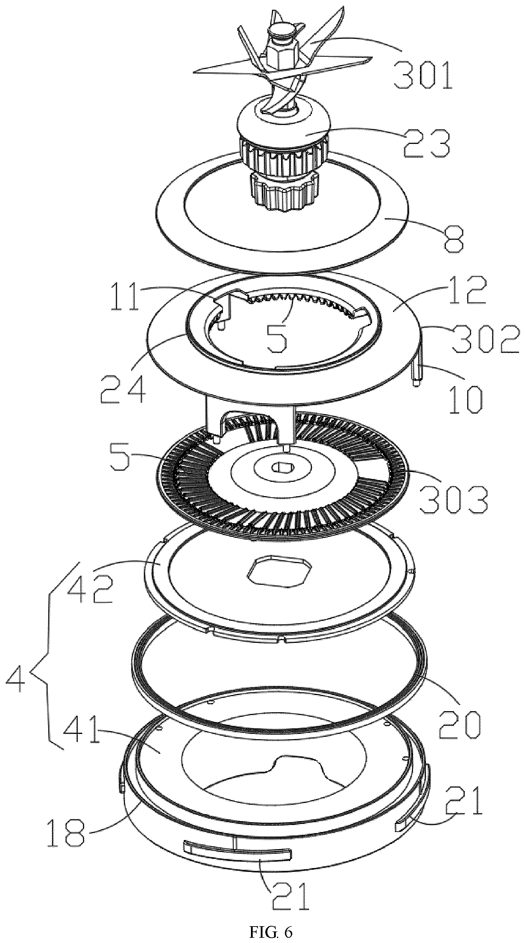

FIG. 6 is an exploded schematic diagram of a sealing base of the grinding machine of the present disclosure.

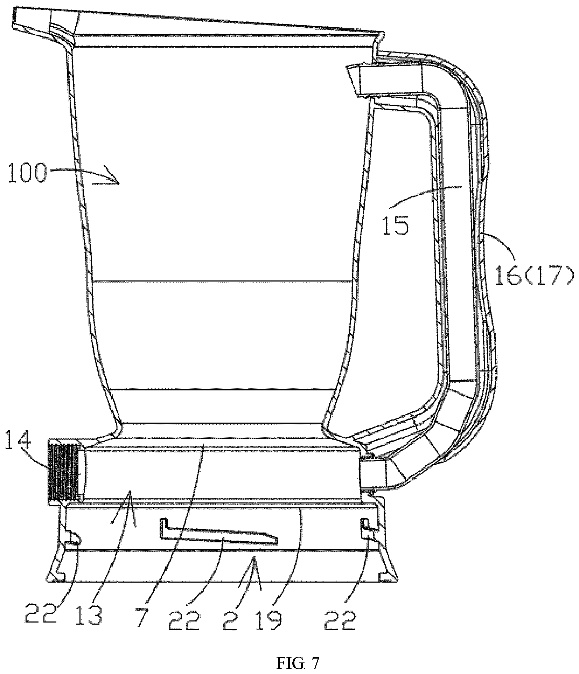

FIG. 7 is a cross-sectional schematic diagram of a container of the grinding machine of the present disclosure.
FIG. 8 is a flow chart of an assembling method of the grinding machine of the present disclosure.

### DETAILED DESCRIPTION

In order to make objectives, technical solutions, and advantages of the embodiments of the present disclosure clear, technical solutions in the embodiments of the present disclosure will be described clearly and completely in conjunction with the accompanying drawings in the embodiments of the present disclosure. Obviously, the described embodiments are only a part of the embodiments of the present disclosure, rather than all of the embodiments. Based on the embodiments of the present disclosure, all other embodiments obtained by those of ordinary skill in the art without creative work shall fall within the protection scope of the present disclosure.

In one embodiment, the present disclosure provides a grinding machine with an integrated double-disc structure. The grinding machine with the integrated double-disc structure comprises a container 1. A bottom portion of the container 1 defines a juice outlet 2. Generally, the juice outlet 2 is formed by an opening of a lower end of the container 1, which is a conventional setting means in the prior art. The grinding machine further comprises a grinding assembly 3, and a sealing base 4. The sealing base 4 seals the juice outlet 2. The sealing base 4 is detachably connected with the container 1, which is convenient for a user to disassemble and clean, The grinding assembly 3 comprises a cutting tool 301, an upper grinding disc 302, and a lower grinding disc 303 arranged in sequence from top to bottom. Generally, the upper grinding disc 302 and the lower grinding disc 303 comprise grinding teeth 5. The grinding teeth 5 of the upper grinding disc 302 are matched the grinding teeth 5 of the lower grinding disc 303. A drive shaft 6 is rotatably arranged on the sealing base 4. The drive shaft 6 runs through the sealing base 4. The drive shaft 6 is rotatably connected with the sealing base 4 through a waterproof bearing seat 23. The cutting tool 301 and the lower grinding disc 303 are fixed on the drive shaft 6. A lower end of the drive shaft 6 is connected with a drive base of the grinding machine. Specifically, the lower end of the drive shaft 6 does not exceed a lower end face of the container 1. The upper grinding disc 302 is fixed on the sealing base 4. A first positioning step 7 configured to position the upper grinding disc 302 is formed on an inner wall of the juice outlet 2. A first elastic sealing piece 8 is arranged between the upper grinding disc 302 and the first positioning step 7.

When the user needs to extract juice or grind food, the container 1 is placed on the drive base, and the drive base drives the drive shaft 6 to rotate, thereby driving the cutting tool 301 to rotate and cut fruits and vegetables into small pieces. Meanwhile, the lower grinding disc 303 rotates relative to the upper grinding disc 302 to grind small pieces of fruits. By fixing the upper grinding disc 302 and the lower grinding disc 303 on the sealing base 4, and by assembling the upper grinding disc 302 and the lower grinding disc 303 with an axis of the drive shaft 6 as the benchmark, a trouble that a gap between the upper grinding disc 302 and the lower grinding disc 303 is difficult to ensure an accuracy caused by the processing technology of the container 1 and the sealing base 4 is avoided. Thus, the grinding machine is easy to disassemble and clean and manufacturing and processing costs are reduced.

Optionally, the upper grinding disc 302 defines a through hole 9. The drive shaft 6 passes through the through hole 9. The upper grinding disc 302 is connected with the sealing base 4 through fixed columns 10. Specifically, three fixed columns 10 are provided and the three fixed columns 10 are flush with an edge of the upper grinding disc 302. In order not to interfere the fixed columns 10, the lower grinding disc 303 is arranged in an area enclosed by the three fixed columns 10. In addition, the fixed column 10 and the upper grinding disc 302 may be integrated into one piece or may be separately arranged, which are selected according to different applications; through different processing methods. The upper grinding disc 302 is of a ring structure and an inner hole of the upper grinding disc 302 is configured as the through hole 9, which facilitate assembly of the drive shaft 6 and entry of small pieces of food into a grinding track.

Further, adjustment of a distance between the upper grinding disc 302 and the lower grinding disc 303 is realized by adjusting a height of the fixed columns 10 or a position of the drive shaft 6. A processing of the upper grinding disc 302 and the lower grinding disc 303 is simple and fast, and precision of the processing and assembling equipment is not high. Different kinds of grinding machines are able to interchange to assemble equipment, without considering a problem of equipment resource occupancy. In special cases, the assembly of the qualified grinding machines can even be completed by manually assembling the upper grinding disc 302 and the lower grinding disc 303. Therefore, assembly requirements of the grinding machine are greatly reduced, which is more conducive to the cost control of the grinding machine.

In addition, in a conventional grinding machine that installs an upper grinding plate on a container separately, since a cutting tool needs to pass through the upper grinding disc when disassembling and cleaning the conventional grinding machine during use, a horizontal length of the cutting tool cannot exceed an inner diameter of the upper grinding disc, otherwise the cutting tool cannot be assembled, and thus free adjustment of the cutting tool is unable to be realized. On the contrary, in the present disclosure, the upper grinding disc 302, the lower grinding disc 303, and the cutting tool 301 are integrated in to a whole, so the upper grinding disc 302, the lower grinding disc 303, and the cutting tool 301 are disassembled together when dismantling and cleaning. By such configuration, a horizontal length of the cutting tool 301 is not limited by an inner diameter of the upper grinding disc 302 is able to be greater than the inner diameter of the upper grinding disc 302. Therefore, more food is made to enter a cutting track of the cutting tool 301 during cutting. Therefore, cutting efficiency is improved and the fruits and vegetables are quickly cut into chips.

Optionally, a feeding groove 11 is provided on an inner side of an upper surface of the upper grinding disc 302. External food enters a lower surface of the upper grinding disc 302 through the feeding groove 11. The feeding groove 11 is configured to guide food scraps with a diameter larger than the gap between the upper grinding disc 302 and the lower grinding disc 303 into the grinding track to further improve the grinding efficiency.

Optionally, an annular inclined surface 12 is formed on an upper end of the upper grinding disc 302. The annular inclined surface 12 is gradually narrowed from bottom to top. The first positioning step 7 is in a shape of a trumpet to match with the annular inclined surface 12, which plays a guiding role in a process of assembling the upper grinding disc 302 . At the same time, when the upper grinding disc 302 is assembled in place, the first positioning step 7 prevents the upper grinding disc 302 from shaking from side to side, so that fixing of the upper grinding disc 302 is stable.

Optionally, the first elastic sealing piece 8 is a sealing rubber ring. A shape of the first elastic sealing piece 8 is matched with a shape of the annular inclined surface 12. The sealing rubber ring has a certain width to ensure the sealing effect. Compared with a cylindrical sealing rubber ring, a sealing performance of the sealing rubber ring is better. On the other hand, compared with a conventional method of ultrasonic welding the upper grinding disc with the plastic container, the elastic sealing rubber ring is more conducive to eliminating processing errors. During the production and processing process, instead of eliminating the processing errors by deformation of the container, the processing errors caused by the processing equipment are eliminated by deformation of the first elastic sealing piece 8 during assembly, which ensure the stability of the grinding machine.

Optionally, an upper end of the annular inclined surface protrudes upward to form an annular cofferdam 24. An outer diameter of the annular cofferdam 24 is equal to an inner diameter of the first elastic sealing piece 8, so the annular cofferdam 24 positions the first elastic sealing pieces 8 when assembling the first elastic sealing piece 8. An assembler only needs to simply place the first elastic sealing piece on the upper grinding disc 302 to realize automatically alignment without performing too many position calibration operations, so the assembly is simple and fast.

Optionally, a grinding cavity 13 is formed between the sealing base 4 and the first positioning step 7. After the assembly is completed, the upper grinding disc 302 and the lower grinding disc 303 are arranged in the grinding cavity 13. The upper grinding disc 302 and the lower grinding disc 303 cooperate with each other to grind the food scraps. During grinding, the food scraps cut by the cutting tool 301 enter the upper surface of the lower grinding disc 303 and then enter the gap between the upper grinding disc 302 and the lower grinding disc 303. The lower grinding disc 303 rotates with respect to the upper grinding disc 302 to grind the food scraps in the grinding track more finely. In addition, an inner wall of the grinding cavity 13 defines an opening 14. After grinding, the fruit and vegetable juice is discharged from the opening 14. The grinding machine further comprises a circulation pipe 15 communicating the grinding cavity 13 and an upper end of an inner cavity of the container 1.

When the cutting tool 301 continuously presses the food scraps into the grinding track between the upper grinding plate 302 and the lower grinding plate 303, ground food juice and food dregs enters the grinding cavity 13 arranged under the lower grinding disc 303, and further enters the container 1 through the circulation pipe 15. Then the ground food juice and food dregs enters an upper portion of the inner cavity 100 of the container 1 through the circulation pipe 15, and the ground food juice and food dregs are cut and ground continuously in a cycle, so as to ground the food finely and quickly to meet the user's requirements. The container comprises a protective cover 16 wrapped on an outer side of the circulation pipe 16. The protective cover 16 forms a handle 17 for human hands to hold. The protective cover has a multi-purpose function, which avoids an addition of additional protective structures, and further improves an appearance of the grinding machine.

Optionally, an annular step 18 is arranged on the sealing base 4. A second positioning step 19 configured to position the annular step 18 is arranged on the inner wall of the juice outlet 2. A second elastic sealing piece 20 is arranged between the annular step 18 and the second positioning step 19. The second elastic sealing piece 20 is a sealing rubber ring and is partially embedded in the annular step 18 to avoid leakage of juice, The sealing base 4 is screwed with the container 1 or the sealing base 4 is snapped on the container 1. Optionally, in the embodiment, the sealing base 4 and the container 1 are connected by rotating fasteners. That is, an inclined fastener 21 is arranged on a side wall of the sealing base 4, and a lifting guiding rail 22 configured to lift the inclined fastener 21 is arranged on the inner wall of the juice outlet 2, Therefore, quick disassembly and assembly of the sealing base 4 and the upper grinding disc 302, and lower grinding disc 303, and the cutting tool 301 is realized.

In order to facilitate the processing of the grinding machine, the sealing base 4 comprises a bottom ring seat 41 and a bottom plate 42 covering the bottom ring seat 41. Both of the inclined fastener and the annular step 18 are arranged on the bottom ring seat 41. The bottom ring seat 41 and the bottom plate 42 are detachably connected by fixing screws.

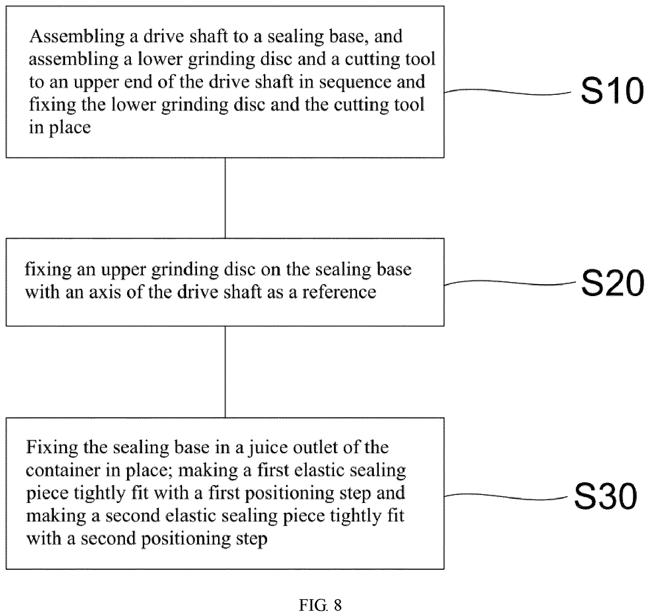

As shown in FIG. 8, in one optional embodiment, the present disclosure further provides an assembling method for the grinding machine. The assembling method for the grinding machine comprises steps:
Step 10: assembling the drive shaft 6 to the sealing base 4, and assembling the lower grinding disc 303 and the cutting tool 301 to an upper end of the drive shaft 6 in sequence and fixing the lower grinding disc 303 and the cutting tool 301 in place;
Step 20: fixing an upper grinding disc 302 on the sealing base 4 with an axis of the drive shaft as a reference; and
Step 30: fixing the sealing base 4 in the juice outlet 2 of the container 1 in place; making the first elastic sealing piece 8 tightly fit with the first positioning step 7 and making the second elastic sealing piece 20 tightly fit with the second positioning step 19.

By taking the drive shaft 6 as a reference, the assembly and positioning of the grinding machine are convenient.

## Claims

1. A grinding machine, comprising:
a container (1);
a grinding assembly (3); and
a sealing base (4);
wherein the sealing base seals the juice outlet; the sealing base is detachably connected with the container; the grinding assembly comprises a cutting tool (301), an upper grinding disc (302), and a lower grinding disc (303) arranged in sequence from top to bottom; a drive shaft (6) is rotatably arranged on the sealing base; the cutting tool and the lower grinding disc are fixed on the drive shaft; **characterised in that** a bottom portion of the container defines a juice outlet (2); the upper grinding disc is fixed on the sealing base; a first positioning step (7) configured to position the upper grinding disc is formed on an inner wall of the juice outlet; a first elastic sealing piece (8) is arranged between the upper grinding disc and the first positioning step.

2. The grinding machine according to claim 1, wherein the upper grinding disc defines a through hole (9); the drive shaft passes through the through hole; the upper grinding disc is connected with the sealing base through fixed columns (10).

3. The grinding machine according to claim 2, wherein the upper grinding disc is of a ring structure and an inner hole of the upper grinding disc is configured as the through hole.

4. The grinding machine according to claim 3, wherein a feeding groove (11) is provided on an inner side of an upper surface of the upper grinding disc; external food enters a lower surface of the upper grinding disc through the feeding groove.

5. The grinding machine according to claim 1, wherein an annular inclined surface (12) is formed on an upper end of the upper grinding disc; the annular inclined surface is gradually narrowed from bottom to top; the first positioning step is in a shape of a trumpet to match with the annular inclined surface.

6. The grinding machine according to claim 5, wherein the first elastic sealing piece is a sealing rubber ring; a shape of the first elastic sealing piece is matched with a shape of the annular inclined surface.

7. The grinding machine according to claim 6, wherein an upper end of the annular inclined surface protrudes upward to form an annular cofferdam (24); an outer diameter of the annular cofferdam is equal to an inner diameter of the first elastic sealing piece.

8. The grinding machine according to claim 1, wherein a grinding cavity (13) is formed between the sealing base and the first positioning step; an inner wall of the grinding cavity defines an opening (14); the grinding machine further comprises a circulation pipe (15) communicating the grinding cavity and an upper end of an inner cavity of the container; the container comprises a protective cover (16) wrapped on an outer side of the circulation pipe; the protective cover forms a handle (17) for human hands to hold.

9. The grinding machine according to claim 1, wherein an annular step (18) is arranged on the sealing base; a second positioning step (19) configured to position the annular step is arranged on the inner wall of the juice outlet; a second elastic sealing piece (20) is arranged between the annular step and the second positioning step; the sealing base is screwed with the container or the sealing base is snapped on the container.

10. An assembling method for a grinding machine, comprising steps:
assembling a drive shaft (6) to a sealing base (4), and assembling a lower grinding disc (303) and a cutting tool (301) to an upper end of the drive shaft in sequence and fixing the lower grinding disc and the cutting tool in place;
fixing an upper grinding disc (302) on the sealing base with an axis of the drive shaft as a reference; and
fixing the sealing base in a juice outlet (2) of the container in place; making a first elastic sealing piece (8) tightly fit with a first positioning step (7) and making a second elastic sealing piece (20) tightly fit with a second positioning step (19).

## Patentansprüche

1. Schleifmaschine, umfassend:
einen Behälter (1);
eine Schleifanordnung (3); und
einen Dichtsitz (4);
wobei der Dichtsitz einen Saftauslass abdichtet; wobei der Dichtsitz lösbar mit dem Behälter verbunden ist; wobei die Schleifanordnung ein Schneidwerkzeug (301), eine obere Schleifscheibe (302) und eine untere Schleifscheibe (303) umfasst, die in der Reihenfolge von oben nach unten angeordnet sind; wobei eine Antriebswelle (6) drehbar an dem Dichtsitz angeordnet ist; wobei das Schneidwerkzeug und die untere Schleifscheibe auf der Antriebswelle befestigt sind; **dadurch gekennzeichnet, dass** ein Bodenteil des Behälters den Saftauslass (2) definiert; wobei die obere Schleifscheibe auf dem Dichtsitz befestigt ist; wobei eine erste Positionierstufe (7), die zum Positionieren der oberen Schleifscheibe konfiguriert ist, an einer Innenwand des Saftauslasses ausgebildet ist; wobei zwischen der oberen Schleifscheibe und der ersten Positionierstufe ein erstes elastisches Dichtungsstück (8) angeordnet ist.

2. Schleifmaschine nach Anspruch 1, wobei die obere Schleifscheibe ein Durchgangsloch (9) definiert; wobei die Antriebswelle durch das Durchgangsloch verläuft; wobei die obere Schleifscheibe über feststehende Säulen (10) mit dem Dichtsitz verbunden ist.

3. Schleifmaschine nach Anspruch 2, wobei die obere Schleifscheibe eine Ringstruktur aufweist und ein Innenloch der oberen Schleifscheibe als das Durchgangsloch konfiguriert ist.

4. Schleifmaschine nach Anspruch 3, wobei eine Zuführnut (11) an einer Innenseite einer oberen Oberfläche der oberen Schleifscheibe vorgesehen ist; wobei externe Nahrungsmittel durch die Zuführnut in eine untere Oberfläche der oberen Schleifscheibe gelangen.

5. Schleifmaschine nach Anspruch 1, wobei eine ringförmige geneigte Fläche (12) an einem oberen Ende der oberen Schleifscheibe ausgebildet ist; wobei sich die ringförmige geneigte Fläche von unten nach oben allmählich verjüngt; wobei die erste Positionierstufe die Form einer Trompete aufweist, um an die ringförmige geneigte Fläche angepasst zu werden.

6. Schleifmaschine nach Anspruch 5, wobei das erste elastische Dichtungsstück ein Dichtungsgummiring ist; wobei eine Form des ersten elastischen Dichtungsstücks an eine Form der ringförmigen geneigten Fläche angepasst ist.

7. Schleifmaschine nach Anspruch 6, wobei ein oberes Ende der ringförmigen geneigten Fläche nach oben vorsteht, um einen ringförmigen Kofferdamm (24) zu bilden; wobei ein Außendurchmesser des ringförmigen Kofferdamms gleich einem Innendurchmesser des ersten elastischen Dichtungsstücks ist.

8. Schleifmaschine nach Anspruch 1, wobei zwischen dem Dichtsitz und der ersten Positionierstufe ein Schleifhohlraum (13) gebildet ist; wobei eine Innenwand des Schleifhohlraums (13) eine Öffnung (14) definiert; wobei die Schleifmaschine ferner ein Zirkulationsrohr (15) umfasst, das den Schleifhohlraum mit einem oberen Ende eines inneren Hohlraums des Behälters verbindet; wobei der Behälter eine Schutzabdeckung (16) umfasst, die auf eine Außenseite des Zirkulationsrohrs gewickelt ist; wobei die Schutzabdeckung einen Griff (17) für menschliche Hände bildet.

9. Schleifmaschine nach Anspruch 1, wobei an dem Dichtsitz eine Ringstufe (18) angeordnet ist; wobei eine zweite Positionierstufe (19), die zum Positionieren der Ringstufe konfiguriert ist, an der Innenwand des Saftauslasses angeordnet ist; wobei zwischen der Ringstufe und der zweiten Positionierungsstufe ein zweites elastisches Dichtungsstück (20) angeordnet ist; wobei der Dichtsitz mit dem Behälter verschraubt wird oder der Dichtsitz auf dem Behälter eingerastet wird.

10. Montageverfahren für eine Schleifmaschine, umfassend folgende Schritte:
Montieren einer Antriebswelle (6) an einem Dichtsitz (4), und Montieren einer unteren Schleifscheibe (303) und eines Schneidwerkzeugs (301) nacheinander an einem oberen Ende der Antriebswelle, und Befestigen der unteren Schleifscheibe und des Schneidwerkzeugs an Ort und Stelle;
Befestigen einer oberen Schleifscheibe (302) auf dem Dichtsitz mit einer Achse der Antriebswelle als Referenz; und
Befestigen des Dichtsitzes in einem Saftauslass (2) des Behälters an Ort und Stelle; Herstellen eines festen Sitzes eines ersten elastischen Dichtungsstücks (8) mit einer ersten Positionierstufe (7) und Herstellen eines festen Sitzes eines zweitens elastischen Dichtungsstücks (20) mit einer zweiten Positionierstufe (19).

## Revendications

1. Broyeur, comprenant:
un récipient (1);
un ensemble de broyage (3); et
une base d'étanchéité (4);
dans lequel la base d'étanchéité bouche une sortie de jus; la base d'étanchéité est reliée de manière détachable au récipient; l'ensemble de broyage comprend un outil de coupe (301), un disque de broyage supérieur (302) et un disque de broyage inférieur (303) disposés en séquence de haut en bas; un arbre d'entraînement (6) est disposé de manière rotative sur la base d'étanchéité; l'outil de coupe et le disque de broyage inférieur sont fixés sur l'arbre d'entraînement; **caractérisée en ce qu'**une partie inférieure du récipient délimite la sortie du jus (2); le disque de broyage supérieur est fixé sur la base d'étanchéité; un premier palier de positionnement (7) configuré pour positionner le disque de broyage supérieur est formé sur une paroi intérieur de la sortie de jus; un premier élément d'étanchéité élastique (8) est agencé entre le disque de broyage supérieur et le premier palier de positionnement.

2. Broyeur selon la revendication 1, dans lequel le disque de broyage supérieur délimite un trou traversant (9); l'arbre d'entraînement passe par le trou traversant; le disque de broyage supérieur est relié à la base d'étanchéité par l'intermédiaire de colonnes fixes (10).

3. Broyeur selon la revendication 2, dans lequel le disque de broyage supérieur présente une structure annulaire et un trou intérieur du disque de broyage supérieur est configuré comme trou traversant.

4. Broyeur selon la revendication 3, dans lequel une rainure d'alimentation (11) est prévue sur un côté intérieur d'une surface supérieure du disque de broyage supérieur; des aliments extérieurs arrivent à une surface inférieure du disque de broyage supérieur par l'intermédiaire de la rainure d'alimentation.

5. Broyeur selon la revendication 1, dans lequel une surface inclinée annulaire (12) est formée sur une extrémité supérieure du disque de broyage supérieur; la surface inclinée annulaire se rétrécit progressivement de bas en haut; le premier palier de positionnement présente une forme de trompette pour correspondre à la surface inclinée annulaire.

6. Broyeur selon la revendication 5, dans lequel le premier élément d'étanchéité élastique est un anneau d'étanchéité en caoutchouc; et le premier élément d'étanchéité élastique présente une forme correspondant à la forme de la surface inclinée annulaire.

7. Broyeur selon la revendication 6, dans lequel une extrémité supérieure de la surface inclinée annulaire s'étend vers le haut pour former un batardeau annulaire (24); un diamètre extérieur du batardeau annulaire est égal au diamètre intérieur du premier élément d'étanchéité élastique.

8. Broyeur selon la revendication 1, dans lequel une cavité de broyage (13) est formée entre la base d'étanchéité et le premier palier de positionnement; une paroi intérieur de la cavité de broyage délimite une ouverture (14); le broyeur comprend en outre un tuyau de circulation (15) en communication avec la cavité de broyage et une extrémité supérieure d'une cavité intérieure du récipient; le récipient comprend un couvercle protecteur (16) couvrant un côté extérieur du tuyau de circulation; et le couvercle protecteur forme une poignée (17) que les mains humaines peuvent tenir.

9. Broyeur selon la revendication 1, dans lequel un palier annulaire (18) est agencé sur la base d'étanchéité; un second palier de positionnement (19) configuré pour positionner le palier annulaire est agencé sur la paroi intérieur de la sortie de jus; un second élément d'étanchéité élastique (20) est agencé entre le palier annulaire et le second palier de positionnement; la base d'étanchéité est vissée avec le récipient ou la base d'étanchéité est engagé sur le récipient.

10. Procédé d'assemblage d'un broyeur, comprenant des étapes suivantes:
assembler un arbre d'entraînement (6) à une base d'étanchéité (4) et assembler un disque de broyage inférieur (303) et un outil de coupe (301) à une extrémité supérieure de l'arbre d'entraînement par séquence et fixer le disque de broyage inférieur et l'outil de coupe en place;
fixer un disque de broyage supérieur (302) sur la base d'étanchéité en prenant un axe de l'arbre d'entraînement comme référence; et
fixer la base d'étanchéité dans une sortie de jus (2) du récipient en place; effectuer un ajustement sans jeu entre un premier élément d'étanchéité élastique (8) et un premier palier de positionnement (7) et effectuer un ajustement sans jeu entre un second élément d'étanchéité élastique (20) et un second palier de positionnement (19).
